# EUROPEAN PATENT APPLICATION

(11) **EP 4 765 234 A1**
(43) Date of publication of application: **24.06.2026**
(21) Application number: 24886260.9
(22) Date of filing: 30.10.2024
(51) Int. Cl.: H01M 4/136, H01M 4/58, H01M 4/62, H01M 4/1397, H01M 10/052, H01M 4/02

(54) **DRY ELECTRODE, MANUFACTURING METHOD THEREFOR, AND LITHIUM SECONDARY BATTERY COMPRISING SAME**

(30) Priority: 30.10.2023 KR 20230147269
(71) Applicant: LG Energy Solution, Ltd., Seoul 07335 (KR)
(72) Inventor: LEE, Ki Seok, Daejeon 34122 (KR); SHIN, Dong Mok, Daejeon 34122 (KR); JANG, Eun Ji, Daejeon 34122 (KR); LEE, Ho Chan, Daejeon 34122 (KR); LEE, Nam Jeong, Daejeon 34122 (KR); YU, Hyung Kyun, Daejeon 34122 (KR); PAENG, Ki Hoon, Daejeon 34122 (KR)
(74) Representative: Goddar, Heinz J.
(86) International application number: PCT/KR2024/016831
(87) International publication number: WO 2025/095588

(57) **Abstract**

The present invention relates to a dry electrode including a current collector, and an electrode mixture film including an electrode active material and a fiberizable binder disposed on the current collector, wherein the current collector has a modulus of 13 GPa to 30 GPa.

## Description

### TECHNICAL FIELD

### Cross-reference to Related Applications

This application claims the benefit of Korean Patent Application No. 10-2023-0147269, filed on 10/30/2023, in the Korean Intellectual Property Office, the disclosure of which is incorporated herein in its entirety by reference.

### Technical Field

The present invention relates to a dry electrode, a method for preparing the same, and a lithium secondary battery including the same.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

The secondary batteries are generally manufactured in a way that an electrode active material slurry is applied to a positive electrode current collector and a negative electrode current collector to prepare an electrode active material layer, which is then subjected to drying and rolling to prepare a positive electrode and a negative electrode, and the positive electrode and the negative electrode are stacked on both sides of a separator to form an electrode assembly having a predetermined shape, and then the electrode assembly is accommodated in a battery case, an electrolyte is injected, and the battery case is sealed.

Meanwhile, as a solvent contained in the slurry evaporates in the process of drying the electrode active material slurry, defects, such as pinholes or cracks, may be generated in the electrode active material layer formed on the current collector. In addition, the electrode active material slurry is not dried uniformly at an internal portion and an external portion thereof, and thus a powder floating phenomenon may occur due to a difference in solvent evaporation rate. That is, powder present in a portion dried earlier may float and form a gap from a portion dried relatively later, resulting in degradation of electrode quality.

Therefore, to address the limitations described above, drying devices capable of controlling the evaporation rate of the solvent while allowing the inside and outside of the electrode active material slurry to be uniformly dried have been considered, but these drying devices are very expensive and require considerable cost and time for operation, and thus have poor manufacturing processability.

Meanwhile, the solvent contained in a typical electrode active material slurry is N-methyl-2-pyrrolidone (NMP), which has a high boiling point and thus requires high heat energy and a very long drying furnace to be dried, making it highly unsuitable for mass production. In addition, N-methyl-2-pyrrolidone (NMP) is a toxic substance and is harmful to living things, thereby failing to be environmentally friendly.

Therefore, there has been a recent trend of active research on dry electrodes in which electrodes are manufactured without using solvents. The dry electrode is obtained by laminating a free-standing type electrode mixture film, generally including an electrode active material and a binder and prepared in the form of a sheet, onto a current collector. The electrode mixture film involves a process in which, first, an electrode active material and a fiberizable binder are mixed by using a blender, the binder is fiberized by imparting shear force thereto through a process, such as jet milling or kneading, and then the resultant mixture is subjected to calendering to form a film shape, thereby providing a free-standing film.

Meanwhile, in typical dry electrode manufacturing process, electrode powder is fed between at least two calendar rolls having different rotation ratios to form an electrode mixture film, and then the electrode mixture film is combined with a current collector coated with a conductive adhesive layer (primer) to manufacture an electrode.

However, cells manufactured using the electrode including an adhesive layer undergo a capacity loss equivalent to the mass and volume of the adhesive layer in each electrode, and cells including no adhesive layer undergo delamination between a current collector and an electrode mixture film, resulting in degradation of battery properties.

Therefore, there is a demand for the development of a dry electrode capable of achieving high capacity density without an adhesive layer while preventing delamination between a current collector and an electrode mixture film.

### DISCLOSURE OF THE INVENTION

### TECHNICAL PROBLEM

The present invention is designed to overcome the limitations of the related art, and thus, an aspect of the present invention provides a dry electrode exhibiting high capacity density and improved adhesive strength between a current collector and an electrode mixture film to prevent delamination between the current collector and the electrode mixture film, a method for preparing the same, and a lithium secondary battery including the same.

### TECHNICAL SOLUTION

[1] According to an aspect of the present invention, provided is a dry electrode including a current collector, and an electrode mixture film including an electrode active material and a fiberizable binder disposed on the current collector, wherein the current collector has a modulus of 13 GPa to 30 GPa.
[2] The present invention provides the dry electrode according to [1] above, wherein the current collector may contain 0.75 wt% or less of iron (Fe) with respect to a total weight of the current collector.
[3] The present invention provides the dry electrode according to [1] or [2] above, wherein the current collector may have a modulus of 14.4 GPa to 24.6 GPa.
[4] The present invention provides the dry electrode according to any one of [1] to [3] above, wherein adhesion between the current collector and the electrode mixture film may be 37 gf/20 mm to 200 gf/20 mm.
[5] The present invention provides the dry electrode according to any one of [1] to [4] above, wherein the current collector may have a tensile strength of 50 MPa to 250 MPa.
[6] The present invention provides the dry electrode according to any one of [1] to [5] above, wherein an interfacial resistance between the current collector and the electrode mixture film may be 0.0100 Ωcm² to 0.9900 Ωcm².
[7] The present invention provides the dry electrode according to any one of [1] to [6] above, wherein the electrode active material may include a phosphorus oxide represented by Formula 1 below.

   [Formula 1] Li₁₊ₓ[Fe_{1-a-b}MnₐM¹_{b}]PO₄

   In Formula 1 above, M¹ includes at least one element selected from the group consisting of Al, Mg, Ni, Co, Ti, Ga, Cu, V, Mo, Nb, W, Zr, Ce, In, Zn, and Y, and x, a, and b satisfy -0.5≤x≤0.5, 0≤a≤0.8, and 0≤b≤0.1.
[8] The present invention provides the dry electrode according to any one of [1] to [7] above, wherein the electrode active material may have an average particle size (D₅₀) of 0.1 µm to 10 µm.
[9] The present invention provides the dry electrode according to any one of [1] to [8] above, wherein the fiberizable binder may include a polytetrafluoroethylene (PTFE) .
[10] According to another aspect of the present invention, there is provided a method for preparing a dry electrode, including (S1) a step of preparing an electrode mixture film including an electrode active material and a fiberizable binder, and a current collector, (S2) a step of heat treating the current collector to prepare a current collector having a modulus of 13 GPa to 30 GPa, and (S3) a st ep of placing the electrode mixture film on at least one surface of the current collector and laminating the electrode mixture film.
[11] The present invention provides the method according to [10] above, wherein the heat treating may be performed at a temperature of 240 °C to 320 °C.
[12] The present invention provides the method according to [10] or [11] above, wherein the heat treating may be performed at a temperature of 280 °C to 300 °C.
[13] The present invention provides the method according to any one of [10] to [12] above, wherein the heat treating may be performed for 1.5 hours to 12 hours.
[14] The present invention provides the method according to any one of [10] to [13] above, wherein the heat treating may be performed for 3.0 hours to 8.0 hours.
[15] According to another aspect of the present invention, there is provided a lithium secondary battery including the dry electrode of any one of [1] to [9] above.

### ADVANTAGEOUS EFFECTS

A dry electrode according to the present invention improves adhesive strength between a current collector and an electrode mixture film by attaching an electrode mixture film onto a current collector heat treated under specific conditions and ductile processed. Accordingly, superior capacity density, no delamination between the current collector and the electrode mixture film, and superior interfacial resistance characteristics may be achieved.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings. Meanwhile, the shape, size, scale, or proportion of elements in the drawings stated in the specification may be exaggerated for clarity.

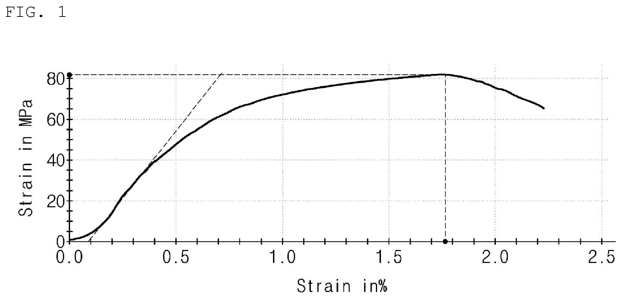

FIG. 1 shows an example of a stress-strain curve of a current collector for obtaining modulus.

### MODE FOR CARRYING OUT THE INVENTION

Hereinafter, the present invention will be described more preferably.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, the term "mixture composition" indicates a mixture containing an electrode active material and fiberizable binder, which is physically mixed to form a uniform dispersed phase, and is a product of a mixing process as used herein as a powder mixture, which may be one in which no solvent is substantially involved. In this case, the fact that no solvent is substantially involved indicates that no solvent is added or only a very small amount of solvent is added when mixing the mixture composition.

Herein, the term "mixed aggregate" indicates one in which the powder mixture is combined or connected and converted into a paste-like aggregate as the mixture composition is affected by shear force and thus a binder is fibrillized, and may be a product of a kneading process as used herein with a solid content of 100%.

Herein, the term "electrode powder" is a material in a powder state where the mixed aggregate is pulverized to have a smaller particle size, and may indicate an electrode material in powder form including an electrode active material and a binder and optionally a conductive material.

Herein, the "electrode mixture film" may indicate a free standing sing sheet type material manufactured using an "electrode mixture" that includes an electrode active material and a binder without the use of a solvent, or an electrode mixture layer laminated onto a current collector. Herein, the term 'self-standing type' indicates one capable of maintaining a single form independent from other members and moving or handling by itself. The electrode mixture film may be formed through compression of the electrode powder, as will be described later. For example, the electrode powder may be integrated through compression to form a layered structure.

Herein, the term "powder-sheeting film" indicates a film from a sheet type formed through a powder-sheeting process where the electrode powder first passes through rolling roll in a roll-to-roll process to a form before passing through a final rolling roll of the process, and may be a free standing type sheet, but a sheet having relatively weak self-supporting properties. Herein, the term "powder-sheeting" indicates a process in which the electrode powder is formed into a free standing type sheet through a rolling roll in a roll-to-roll process, and "sheeting" is a process performed in the process in which the powder-sheeting film is prepared into an electrode mixture film, and may indicate a process of rolling the powder-sheeting film.

Herein, an MD direction (machine direction) indicates a longitudinal direction of a target object (current collector or electrode mixture film), i.e., a direction in which a target object (current collector or electrode mixture film) runs during production, and a TD direction (transverse direction) indicates a width direction of a target object (current collector or electrode mixture film), i.e., a direction perpendicular to the MD direction.

Herein, the term, average particle size (D₅₀) may be defined as a particle size at a cumulative volume of 50% in a particle size distribution curve of particles. The D₅₀ may be measured, for example, by using a laser diffraction method. The laser diffraction method generally allows the measurement of a particle size ranging from a submicron level to a few mm and may produce highly repeatable and high-resolution results.

Herein, a specific surface area is measured through a Brunauer-Emmett-Teller (BET) method, and preferably may be calculated from an amount of nitrogen gas adsorbed at a liquid nitrogen temperature (77 K) using BELSORP-mino II from BEL JAPAN, INC.

The inventors have conducted continuous research on a dry electrode achieving superior capacity density of a battery, no delamination between a current collector and an electrode mixture film, and excellent interfacial resistance characteristics, and have found that when a modulus of a current collector is controlled within a certain range, the current collector exhibits high strength and ductility, preventing fracture during a roll-to-roll process, while also improving adhesion and interfacial resistance between the current collector and the electrode mixture film, thereby completing the invention.

### Dry electrode

Hereinafter, a dry electrode according to the present invention will be described.

The dry electrode according to the present invention includes a current collector, and an electrode mixture film including an electrode active material and a fiberizable binder disposed on the current collector. The current collector has a modulus of 13 GPa to 30 GPa.

The modulus of the current collector indicates a slope (stress/strain) in an elastic section of a stress-strain curve of the current collector. Since methods of measuring the modulus are known to those skilled in the art, a detailed description will be skipped, and equipment used to measure the modulus may be, for example, a universal testing machine. More preferably, the modulus may be measured by calculating a slope when strain is 0.2% in a graph of the stress-strain curve. For example, as shown in an image of FIG. 1, a modulus value may be obtained by measuring a slope value (differential value) when the strain is 0.2%.

According to an embodiment of the present invention, the current collector has a modulus of 13 GPa to 30 GPa. The current collector may preferably have a modulus of 13.5 GPa or more, 14.0 GPa or more, or 14.4 GPa or more, and a modulus of 30 GPa or less, 28 GPa or less, 26 GPa or less, 25.5 GPa or less, 25.0 GPa or less, or 24.6 GPa or less, and more preferably a modulus of 14.4 GPa to 24.6 GPa.

When the modulus of the current collector is greater than 30 GPa, the electrode mixture film and the collector need to laminated with strong pressure to prevent delamination between the two. In this case, an electrode has reduced porosity, and thus is less flexible and likely to be destroyed, and exhibits degradation in high-rate charge/discharge performance. In addition, an active material is damaged by the strong pressure, which causes excessive side reactions with an electrolyte, resulting in reduced lifespan of batteries.

When the modulus of the current collector is less than 13 GPa, the chances of damage to the current collector during the process of rolling an electrode to improve the energy density of batteries increase, and easy deformation or breakage caused by tension applied to the current collector during a roll-to-roll manufacturing process is induced.

Therefore, when the above range is satisfied, the current collector may be processed into a dry electrode exhibiting high strength and strong adhesion, and thus excellent adhesion between the current collector and the electrode mixture film may be achieved even without an adhesive layer or a conductive primer layer, and accordingly, cells may have enhanced energy density, and a significant improvement in energy density may be expected at a module or pack level. In addition, damage to an active material due to strong pressure may be prevented, and thus batteries may exhibit enhanced lifespan.

The modulus of the current collector is to maintain high strength so as to withstand the pressure applied by rolling during electrode manufacturing and the tension applied in the roll-to-roll process, and to enhance adhesion between the current collector and the electrode mixture film by appropriately softening the current collector.

Typically, the purpose was to prepare ultra high strength current collectors by only focusing on the issue of breakage of the current collector, but increasing the modulus to manufacture the ultra high strength current collectors prevented surface softening, leading to a drastic decrease in adhesion between the current collector and the electrode mixture film, making lamination between the current collector and the electrode mixture film infeasible. That is, the preparation of the dry electrode itself may not be achievable.

Therefore, typically, an adhesive layer or a conductive primer layer was formed between the current collector and the electrode mixture film to ensure that lamination between the current collector and the electrode mixture film is properly performed as described above. However, when the adhesive layer or conductive primer layer is formed, the dry electrode may become thicker, thereby decreasing the energy density of batteries, and an increase in resistance of batteries, which is induced by disconnected conductive network caused by wetting and expanding of a large amount of binder included in the adhesive layer or conductive primer layer due to an electrolyte may occur. In addition, a large amount of binder may be oxidized or degraded at a high potential to cause an increase in resistance of batteries, and additional processes and costs are required to form an adhesive layer or a conductive primer layer.

However, in the present invention, a current collector satisfying specific conditions undergoes heat treatment at a suitable temperature and for a suitable duration, thereby suitably ductile processing a surface of the current collector. Accordingly, through the softening of the surface of the current collector, electrode active materials contained in the electrode mixture film strongly support and bond with the surface of the current collector, enabling excellent adhesion between the current collector and the electrode mixture film without the need for an adhesive layer or a conductive primer layer.

According to an embodiment of the present invention, the current collector may contain 0.75 wt% or less of iron (Fe) with respect to a total weight of the current collector. The current collector may preferably contain iron (Fe) in an amount of 0.70 wt% or less, 0.65 wt% or less, 0.60 wt% or less, 0.55 wt% or less, 0.50 wt% or less, 0.45 wt% or less, 0.40 wt% or less, 0.35 wt% or less, 0.30 wt% or less, 0.25 wt% or less, 0.20 wt% or less, 0.15 wt% or less, or 0.10 wt% or less, and in an amount of 0.01 wt% or more, and preferably in an amount of 0.01 wt% to 0.10 wt%. When the iron (Fe) content of the current collector is excessive, adhesion between the current collector and the electrode mixture film within the modulus range is hardly achievable, and interfacial resistance rapidly increases due to delamination between the current collector and the electrode mixture film. Therefore, when the range is satisfied, excellent ductility and strength of the current collector may be achieved to prevent breakage, while superior adhesion, energy density, and interfacial resistance characteristics may be obtained.

According to an embodiment of the present invention, adhesion between the current collector and the electrode mixture film may be 37 gf/20 mm to 200 gf/20 mm, preferably 38 gf/20 mm to 80 gf/20 mm, and more preferably 40 gf/20 mm to 45 gf/20 mm. When the above range is satisfied, electrochemical properties of batteries may be improved because delamination between the current collector and the electrode mixture film does not occur, and a dry electrode may be prepared without an adhesive layer, and thus cells may exhibit superior energy density and processability.

According to an embodiment of the present invention, the current collector may have a tensile strength of 50 MPa to 250 MPa, preferably 50 MPa or more, 60 MPa or more, 70 MPa or more, 80 MPa or more, 85 MPa or more or 90 MPa or more, and a tensile strength of 250 MPa or less, 225 MPa or less, 200 MPa or less, 175 MPa or less, 150 MPa or less, 125 MPa or less, 120 MPa or less, 115 MPa or less, 110 MPa or less, or 105 MPa or less. More preferably, the current collector may have a tensile strength of 90 MPa to 105 MPa. When the above range is satisfied, the current collector may not break during rolling for dry electrode manufacturing, and even when the process speed is increased to increase production, the current collector may sufficiently withstand tension to avoid breakage. In addition, the current collector has a tensile strength that is not excessively high, and may thus be suitable for mass production and does not require a high level of process difficulty, resulting in excellent processability.

According to an embodiment of the present invention, the current collector may have an elongation rate at break of 1.5% to 10%, preferably 2% to 7%, and more preferably 3% to 5%. When the above range is satisfied, processability may be improved due to appropriate ductility.

There are no particular restrictions on methods for measuring the above tensile strength and elongation rate at break, but for example, the tensile strength and elongation rate at break may be measured using the UTM equipment of ZwickRoell according to a method of ASTM D638.

According to an embodiment of the present invention, an interfacial resistance between the current collector and the electrode mixture film may be 0.0100 Ωcm² to 0.9900 Ωcm², preferably 0.1000 Ωcm² to 0.8000 Ωcm², and more preferably 0.3000 Ωcm² to 0.7500 Ωcm². When the above range is satisfied, batteries may have enhanced resistance characteristics and output characteristics, and quick charging performance and lifespan characteristics may be improved.

Meanwhile, there may be various factors affecting the adhesion and interfacial resistance between the current collector and the electrode mixture film, such as current collector heat treatment temperature. Yet, other examples may include the composition of an electrode active material or an average particle size of an electrode active material.

There is no particular limitation on the electrode active material as long as it is a commonly used electrode active material, and for example, the electrode active material may be a positive electrode active material or a negative electrode active material.

The positive electrode active material is a compound capable of reversibly intercalating and deintercalating lithium, and the positive electrode active material may preferably include a lithium metal oxide including lithium and at least one metal such as cobalt, manganese, nickel, or aluminum. More preferably, the lithium metal oxide may be lithium-manganese-based oxide (e.g., LiMnO₂, LiMn₂O₄, and the like), lithium-cobalt-based oxide (e.g., LiCoO₂ and the like), lithium-nickel-based oxide (e.g., LiNiO₂ and the like), lithium-nickel-manganese-based oxide (e.g., LiNi_{1-Y}Mn_{Y}O₂ (where 0<Y<1), LiMn_{2-Z}Ni_{Z}O₄ (where 0<Z<2), and the like), lithium-nickel-cobalt-based oxide (e.g., LiNi_{1-Y1}Co_{Y1}O₂ (where 0<Y1<1 and the like), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), and the like), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), and the like), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg, and Mo, and p2, q2, r2, and s2 are each an atomic fraction of independent elements, wherein 0<p2<1, 0<q2<1, 0 <r2<1, 0<s2<1, and p2+q2+r2+s2=1 are satisfied), lithium iron phosphate (e.g., Li₁₊ₐFe₁₋ₓMₓ(PO_{4-b})X_{b} (where M is at least one selected from Al, Mg, and Ti, and -0.5≤a≤0.5, 0≤x≤0.5, and 0≤b≤0.1 are satisfied), and the like, and any one thereof or a compound of two or more thereof may be included.

In particular, in terms of improving capacity and stability of a battery, the lithium metal oxide may be LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), lithium nickel cobalt aluminum oxide (e.g., Li(Ni_{0.8}Co_{0.15}Al_{0.05})O₂ and the like), or lithium nickel cobalt manganese aluminum oxide (e.g., Li(Ni_{0.86}Co_{0.05}Mn_{0.07}Al_{0.02})O₂), lithium iron phosphate (e.g., LiFePO₄), and the like, and any one thereof or a compound of two or more thereof may be included.

The negative electrode active material may include at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature fired carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al, and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me:Mn, Fe, Pb, or Ge; Me':Al, boron (B), P, Si, Groups I, II, and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

Preferably, the electrode active material may include a phosphorus oxide represented by Formula 1 below.

[Formula 1] Li₁₊ₓ[Fe_{1-a-b}MnₐM¹_{b}]PO₄

In Formula 1 above, M¹ comprises at least one element selected from the group consisting of Al, Mg, Ni, Co, Ti, Ga, Cu, V, Mo, Nb, W, Zr, Ce, In, Zn, and Y, and x, a, and b satisfy -0.5≤x≤0.5, 0≤a≤0.8, and 0≤b≤0.1. When the above conditions are satisfied, it may be desirable in terms of achieving superior economic efficiency and stability. More preferably, the electrode active material may include a phosphorus oxide represented by Formula 1-1 below.

[Formula 1-1] LiFePO₄

When the above conditions are satisfied, superior adhesion between the current collector and the electrode mixture film according to the present invention is achieved, thereby preventing delamination between the current collector and the electrode mixture film. More preferably, since lithium iron phosphate used as an electrode active material generally has a small average particle size (D₅₀), when laminating a current collector that is not subjected to heat treatment and an electrode mixture film containing lithium iron phosphate, adhesion is not easily achieved, making it impossible to prepare a dry electrode. Therefore, a current collector having a ductile processed surface through heat treatment may exhibit excellent adhesion with an electrode mixture film containing lithium iron phosphate without an additional adhesive layer or conductive primer layer, thereby preventing delamination between the current collector and the electrode mixture film.

The electrode active material may have an average particle size (D₅₀) of 0.1 µm to 10 µm, preferably 0.5 µm to 8.0 µm, and more preferably 1 µm to 5 µm. When the average particle size of the electrode active material is excessively large, degradation in capacity of batteries may be caused, degradation in high-rate charging/discharging characteristics may be caused from high internal resistance and reduced ion movement speed. In addition, when the average particle size of the electrode active material is excessively small, when manufacturing an electrode mixture film containing the electrode active material, mechanical strength, such as tensile strength and elongation at break, of the electrode mixture film may be reduced.

Accordingly, when the average particle size D₅₀ of the electrode active material satisfies the above range, the particle size of the obtained electrode powder may be uniform and an appropriate specific surface area of the electrode active material particles may be obtained, and thus capacity characteristics, electrical conductivity, and high-rate charging/discharging characteristics of batteries may be improved. In addition, when manufacturing the electrode mixture film, it is easy to form a film, and mechanical properties such as tensile strength and elongation at break may be improved.

According to an embodiment of the present invention, a coating layer formed on the electrode active material and containing carbon (C) may be further provided. When the above conditions are satisfied, ionic conductivity and electronic conductivity may be improved.

According to an embodiment of the present invention, the electrode mixture film may further include a conductive material. The conductive material is a component for further improving the conductivity of the electrode active material, and is not particularly limited as long as it has conductivity without causing chemical changes in batteries, and for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; polyphenylene derivatives, or the like may be used. Specifically, the conductive material may include at least one selected from the group consisting of activated carbon, graphite, carbon black, and carbon nanotubes (CNT) for uniform mixing of the conductive material and improvement of conductivity.

The fiberizable binder is not necessarily specific to a particular type as long as it is fiberizable, and the fibrillation indicates a process of finely dividing a polymer. For example, the fibrillization may be performed using mechanical shear force, and the like, and the fibrillized polymer fibers are disintegrated on their surfaces to generate a plurality of microfibers (fibrils). The fiberizable binder may preferably include at least one selected from the group consisting of polytetrafluoroethylene (PTFE) and polyolefin, more preferably include polytetrafluoroethylene (PTFE), and even more preferably may be polytetrafluoroethylene (PTFE). Preferably, the polytetrafluoroethylene (PTFE) may be included in an amount of 60 wt% or greater with respect to a total binder weight. In this case, the binder may further include one or more of polyethylene oxide (PEO), polyvinylidene fluoride (PVdF), polyvinylidene fluoride-cohexafluoropropylene (PVdF-HFP), and polyolefin-based binder.

According to an embodiment of the present invention, when the electrode mixture film further includes a conductive material, a weight ratio of the electrode active material, the conductive material, and the fiberizable binder may be 80 to 98 wt% : 0.5 to 10 wt% : 0.5 to 10 wt%, and preferably 85 to 98 wt% : 0.5 to 5 wt% : 0.5 to 10 wt%. When the above range is satisfied, the binder may be appropriately contained, and consequently, sufficient fiberization of the binder induces agglomeration of the electrode powder and the formation of the electrode mixture film while improving physical properties of the electrode mixture film.

When the dry electrode is a positive electrode, the current collector is not particularly limited as long as it has conductivity without causing chemical changes in batteries. For example, stainless steel, aluminum, nickel, titanium, fired carbon, or aluminum or stainless steel that is surface-treated with one of carbon, nickel, titanium, silver, or the like may be used as the collector.

When the dry electrode is a negative electrode, the current collector is not particularly limited as long as it has a high conductivity without causing changes in batteries, and for example, copper, stainless steel, aluminum, nickel, titanium, fired carbon, copper or stainless steel which is surface-treated with carbon, nickel, titanium, silver, or the like, an aluminum-cadmium alloy, or the like may be used.

For example, the current collector may be an aluminum alloy thin film that satisfies the above-described iron (Fe) content. When the above conditions are satisfied, the modulus of the current collector may be easily achieved along with high strength.

The current collector may have a thickness of 3 µm to 50 µm, but the thickness of the current collector is not limited thereto. In addition, fine irregularities may be formed on a surface of the current collector to improve the adhesion of the mixture film.

According to an embodiment of the present invention, a conductive primer layer may not be included between the current collector and the electrode mixture film. For example, a conductive primer layer may not be formed on a surface of the current collector, preferably, an adhesive layer or a conductive primer layer may not be formed on a surface of the current collector, and more preferably, an adhesive layer or a conductive primer layer for reducing resistance and improving adhesion may not be formed on a surface of the current collector. In this case, the adhesive layer or the conductive primer layer may include a conductive material and a binder, and the conductive material is not limited as long as the material is conductive, but may be, for example, a carbon-based material. The binder may include a fluorine-based binder (including PVDF and PVDF copolymer), an acryl-based binder, and an aqueous binder, which are soluble in solvents.

When the adhesive layer or conductive primer layer is not included, the dry electrode may be prepared to be thin, thereby increasing the energy density of batteries, and an increase in resistance of batteries, which is induced by disconnected conductive network caused by wetting and expanding of a large amount of binder included in the adhesive layer or conductive primer layer due to an electrolyte may be prevented. In addition, a large amount of binder may be prevented from being oxidized or degraded at a high potential and the increase in resistance of batteries may be prevented accordingly. Moreover, processability may be excellent in that no additional process or cost is required to form the adhesive layer or conductive primer layer.

### Method for preparing dry electrode

Hereinafter, a method for preparing a dry electrode according to the present invention will be described.

The method for preparing a dry electrode according to the present invention includes (S1) preparing an electrode mixture film comprising an electrode active material and a fiberizable binder, and a current collector, (S2) heat treating the current collector to prepare a current collector having a modulus of 13 GPa to 30 GPa, and (S3) placing the electrode mixture film on at least one surface of the current collector and laminating the electrode mixture film.

Hereinafter, the method for preparing a dry electrode according to the present invention is preferably described for each step.

### (Step S1)

(S1) involves preparing an electrode mixture film including an electrode active material and a fiberizable binder, and a current collector.

First, an electrode mixture film including an electrode active material and a fiberizable binder will be described.

The electrode active material and the fiberizable binder are described above, and thus a detailed description thereof will be skipped, and the electrode mixture film may be prepared as follows.

First, the electrode active material, the fiberizable binder, and/or the conductive material are mixed to obtain a mixture composition. In this case, the mixing is performed such that the electrode active material, the fiberizable binder, and/or the conductive material are uniformly distributed, and the components are mixed in powder form, and thus the mixing is not limited and may be performed through various methods as long as simple mixing is allowed. However, in the present invention, a dry electrode with no use of a solvent is prepared, and thus the mixing may be performed through dry mixing, and the materials described above may be added to a device such as a mixer or a blender, and mixed.

In this case, the mixing may be performed in a mixer in a range of 100 rpm to 50000 rpm for 1 to 60 minutes, and preferably in a range of 500 rpm to 20000 rpm for 2 to 30 minutes. When the mixing is performed within the above range, the materials may be uniformly mixed, thereby improving battery performance.

Next, for the mixture composition obtained from the above mixing, a fiberization process may be performed to fiberize the fiberizable binder.

The fiberization process is not particularly limited if it is a generally performed mixing, but preferably, the process may be performed through high temperature-low shear mixing (kneading), and may be performed through a kneader, for example. Through this kneading, the fiberizable binder is fibrillized, and accordingly, an electrode active material and/or conductive material powders are combined or connected to form a mixed aggregate with a solid content of 100%.

The kneading may be performed at a rate of 10 rpm to 100 rpm, and preferably may be performed at a rate of 20 rpm to 70 rpm. In addition, the kneading may be performed for 1 to 120 minutes, and preferably for 2 to 60 minutes. When the above range is satisfied, the fibrillization is appropriately performed and thus battery characteristics may be improved.

In addition, the kneading may be performed at high temperature and normal pressure or higher, and preferably, may be performed at pressure higher than normal pressure.

More preferably, the kneading may be performed at 50 °C to 230 °C, preferably at 90 °C to 200 °C. When the kneading is performed at a high temperature in the above range, fibrillization of the binder and lump formation through kneading may be well performed, and breakage of the binder subjected to fibrillization may be appropriately prevented.

In addition, the kneading may be performed at normal pressure or higher, preferably at a pressure of 1 atm to 3 atm, more preferably at a pressure of 1.1 atm to 3 atm. When the kneading is performed within the above range, breakage of the binder subjected to fibrillization may be appropriately prevented, and a mixed aggregate may be prevented from having an excessively high density.

That is, according to the present invention, when a high temperature-low shear mixing process is performed at high temperature and normal pressure or higher instead of high shear mixing, the effect intended by the present invention may be achieved.

Next, pulverizing the mixed aggregate prepared through the above kneading to obtain electrode powder may be performed.

The mixed aggregate prepared through the kneading may be directly subjected to calendering, but in this case, the aggregate may be pressed at strong pressure and high temperature to form a thin film, and accordingly, the film may have an excessively high density or a uniform film is not obtainable. Therefore, the mixed aggregate prepared as above is pulverized to manufacture an electrode powder.

An instrument used for the pulverization is not particularly limited, but the pulverization may preferably be performed using an instrument such as a blender or grinder.

The pulverizing may be performed at a rate of 1,000 rpm to 20000 rpm for 5 seconds to 10 minutes, preferably at a rate of 2000 rpm to 18000 rpm for 10 seconds to 5 minutes. When the pulverizing is performed within the above range, sufficient pulverization may be achieved to prepare powder of an appropriate size for forming a film, and a large amount of fine powder may not be generated in the mixed aggregate.

The electrode powder may have an average particle size of 10 µm to 3000 µm, preferably 50 µm to 1500 µm, and more specifically 100 µm to 700 µm. When the above range is satisfied, an electrode mixture film having uniform thickness and density may be formed, and excellent electrode mixture film physical properties may be obtained,

Meanwhile, the electrode powder according to the present invention may, although not essential, further include fillers to suppress expansion of the electrode. The filler is not particularly limited as long as it is a fibrous material without causing chemical changes in batteries, and may be at least one selected from, for example, olefin-based polymers such as polyethylene and polypropylene; fibrous materials such as glass fiber and carbon fiber.

Next, a calendering method in which the electrode powder according to the present invention is supplied to a calender device and the supplied material is heat pressed using calendering roll(s) included in the calender device may be used to prepare an electrode mixture film. Preferably, the electrode powder according to the present invention may be supplied to a calender roll and heat pressed to prepare a sheet-shaped electrode mixture film.

The calender device may include a roll press portion in which two of the above calendering rolls are disposed facing each other, and a plurality of the roll press portions may be disposed consecutively.

In this case, the roll press portions may each independently be appropriately adjusted in a rotation speed ratio of 1:1 to 1:10 for the two calendering rolls.

In addition, the prepared electrode mixture film may be put back into the roll press unit and thermocompressed 1 to 10 times to be adjusted to have an appropriate thickness.

Descriptions of the current collector are given above, and thus will be skipped.

### (Step S2)

Next, (S2) involves heat treating the current collector to prepare a current collector having a modulus of 13 GPa to 30 GPa.

According to an embodiment of the present invention, the current collector is controlled to have a modulus of 13 GPa to 30 GPa through heat treatment, thereby preventing breakage and damage of the current collector while achieving superior adhesion and interfacial resistance between the current collector and the electrode mixture film. In addition, superior adhesion and interfacial resistance may be achieved regardless of the presence or absence of a conductive primer layer between the current collector and the electrode mixture film, and superior energy density may be achieved accordingly.

According to an embodiment of the present invention, the heat treating may be performed at a temperature of 240 °C to 320 °C, preferably 240 °C or higher, 245 °C or higher, 250 °C or higher, 255 °C or higher, 260 °C or higher, 265 °C or higher, 270 °C or higher, 275 °C or higher, or 280 °C or higher, and a temperature of 320 °C or lower, 315 °C or lower, 310 °C or lower, 305 °C or lower, or 300 °C or lower, and more preferably a temperature of 280 °C to 300 °C. When the above temperature is excessively low, the current collector may not be properly ductile processed, and thus the modulus described above is not easily achieved, resulting in reduced adhesive strength between the current collector and the electrode mixture film. In addition, when the above temperature is excessively high, the current collector may have significantly reduced tensile strength, which may cause the current collector to be easily deformed or broken during the rolling process, and the modulus described above is not easily achieved, leading to degradation in adhesive strength and interfacial resistance. Therefore, when the above temperature is satisfied, the modulus described above may be achieved, and thus the adhesive strength between the current collector and the electrode mixture film and interfacial resistance characteristics may be improved, which may prevent the breakage of the current collector. In addition, since the adhesive strength is sufficient, an adhesive layer may be omitted within the dry electrode, thereby increasing capacity density in batteries.

According to an embodiment of the present invention, the heat treating may be performed for 1.5 hours to 12 hours, preferably 1.5 hours or more, 2.0 hours or more, 2.5 hours or more or 3.0 hours or more, and for 12 hours or less, 11.5 hours or less, 11 hours or less, 10.5 hours or less, 10 hours or less, 9.5 hours or less, 9.0 hours or less, 8.5 hours or less, or 8.0 hours or less, and more preferably for 3.0 hours to 8.0 hours. When the above range is satisfied, the current collector may be appropriately ductile processed to improve the adhesion between the current collector and the electrode mixture film, and improve the resistance characteristics and lifespan characteristics of batteries. In addition, sufficient tensile strength may be secured to prevent the breakage of the current collector.

### (Step S3)

(S3) involves placing the electrode mixture film on at least one surface of the current collector and laminating the electrode mixture film.

The lamination involves placing and rolling the electrode mixture film on at least one surface of the current collector for attaching, thereby preparing a dry electrode according to the present invention.

According to an embodiment of the present invention, the lamination may be performed using a lamination portion including two lamination rolls, and a rotation speed ratio of the lamination rolls may be 1:1.000 to 1:1.100. When the above range is satisfied, the electrode mixture film and the current collector may be appropriately rolled, and thus excellent adhesion may be achieved between the electrode mixture film and the current collector.

The lamination may be performed through a method of roll press using a lamination roller, and in this case, the lamination roller may be maintained at a temperature of 20 °C to 200 °C.

### Lithium secondary battery

Hereinafter, a lithium secondary battery according to the present invention will be described.

The lithium secondary battery according to the present invention includes a dry electrode according to the present invention. Preferably, the lithium secondary battery may include a positive electrode, a negative electrode, a separator, and an electrolyte, the positive electrode and/or the negative electrode may be a dry electrode, and preferably, the lithium secondary battery may include the dry electrode according to the present invention, a negative electrode, a separator, and an electrolyte. When only one of the positive electrode or the negative electrode is the dry electrode according to the present invention, the other electrode may be an electrode manufactured through a typical wet manufacturing method.

The separator separates the negative electrode and the positive electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Preferably, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Preferably, the electrolyte may include an organic solvent and a lithium salt.

Any organic solvent may be used without particular limitation as long as it may serve as a medium through which ions involved in an electrochemical reaction of a battery may move. Preferably, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where Ra is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. Preferably, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂ may be used. The lithium salt may be used in a concentration range of 0.1 M to 4.0 M, preferably 0.5 M to 3.0 M, more preferably 1.0 M to 2.0 M. When the concentration of the lithium salt is included within the above range, the electrolyte has suitable conductivity and viscosity and may thus exhibit excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifespan characteristics of batteries, suppressing reduction in battery capacity, enhancing the discharge capacity of batteries, and the like. In this case, the additive may be included in an amount of 0.1 wt% to 10.0 wt% with respect to a total weight of the electrolyte.

In addition, the lithium secondary battery according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person with ordinary skill in the art to which the present invention pertains. The present invention may, however, be embodied in many different forms and should not be construed as being limited to the examples set forth herein.

Hereinafter, the present invention will be described in more detail with reference to specific examples.

### Example 1: Preparation of dry electrode

94 g of lithium iron phosphate (LFePO₄, Aleees, M121, D₅₀: 2.2 µm) as an electrode active material, 1.5 g of carbon black as a conductive material, and 4.5 g of polytetrafluoroethylene (PTFE) as a binder were added and mixed at a rotation speed of 10000 rpm for 1 minute to prepare a mixture composition.

The mixture composition was introduced into a kneader, and then kneaded at a rotation speed of 50 rpm for 5 minutes at 1.1 atm and 150 °C to prepare a mixed aggregate.

The mixed aggregate was put into a blender and ground at a rotation speed of 10000 rpm for 40 seconds to prepare an electrode powder.

The electrode powder was subjected to calendering to prepare an electrode mixture film (roll diameter: 88 mm, temperature: 100 °C, roll speed ratio: 20/24 rpm).

Thereafter, an aluminum alloy thin film having a thickness of 15 µm and an iron (Fe) content of 0.1 wt% or less was heat treated in a firing furnace maintained at 280 °C for 8 hours and ductile processed, and then the mixture film was placed on both sides of the ductile processed current collector, and laminated using a roll press maintained at 150 °C to prepare a dry electrode.

### Examples 2 to 5 and Comparative Examples 1 to 8: Preparation of dry electrode

A dry electrode was prepared in the same manner as in Example 1, except that the heat treatment temperature and duration were controlled as described in Table 1.

**[Table 1]**

| | Heat treatment | |
|---|---|---|
| | Temperature (°C) | Time (h) |
| Example 1 | 280 | 8 |
| Example 2 | 280 | 12 |
| Example 3 | 300 | 3 |
| Example 4 | 300 | 6 |
| Example 5 | 300 | 8 |
| Comparative Example 1 | - | - |
| Comparative Example 2 | 230 | 6 |
| Comparative Example 3 | 280 | 1 |
| Comparative Example 4 | 300 | 1 |
| Comparative Example 5 | 330 | 0.5 |
| Comparative Example 6 | 330 | 6 |
| Comparative Example 7 | 330 | 12 |
| Comparative Example 8 | 370 | 6 |

### Experimental Example 1: Measurement of modulus, tensile strength, and elongation rate at break of current collector

The current collectors prepared in Examples 1 to 5 and Comparative Examples 1 to 8 were cut into 100 mm x 20 mm, and then the modulus, tensile strength, and elongation rate at break were measured using UTM equipment from ZwickRoell according to a method of ASTM D638. In this case, the preload was 0.01 kg/cm, and the speed was 1 mm/min.

In this case, the modulus is an elastic coefficient, and is a value measured as a slope of an elastic section (stress/strain) observed in a stress-strain curve, preferably a slope when the strain on the graph is 0.2%. The tensile strength was obtained as a maximum value (MPa) of the force applied up to the point where breakage does not occur, and the elongation rate at break was obtained by multiplying (the length at the point of sample breakage - the initial sample length)/the initial sample length by 100.

The measurement results are shown in table 2 below.

**[Table 2]**

| | Collector | | |
|---|---|---|---|
| | Modulus (GPa) | Tensile strength (MPa) | Elongation rate at break (%) |
| Example 1 | 24.6 | 104.96 | 3.54 |
| Example 2 | 18.9 | 103.56 | 3.58 |
| Example 3 | 18.4 | 99.92 | 3.54 |
| Example 4 | 17.1 | 96.56 | 3.14 |
| Example 5 | 14.4 | 91.58 | 3.48 |
| Comparative Example 1 | 35.4 | 281.00 | 3.00 |
| Comparative Example 2 | 38.7 | 161.20 | 2.00 |
| Comparative Example 3 | 33.7 | 141.40 | 2.16 |
| Comparative Example 4 | 30.7 | 125.60 | 2.90 |
| Comparative Example 5 | 32.6 | 121.40 | 3.02 |
| Comparative Example 6 | 12.9 | 86.20 | 3.48 |
| Comparative Example 7 | 11.8 | 87.42 | 3.76 |
| Comparative Example 8 | 10.3 | 81.12 | 3.58 |

### Experimental Example 2: Adhesion measurement

The adhesive strength between the electrode mixture film and the current collector was measured in each dry electrode prepared by Examples 1 to 5 and Comparative Examples 1 to 8.

Preferably, each dry electrode prepared by Examples 1 to 5 and Comparative Examples 1 to 8 was cut into 100 mm x 20 mm, and an electrode mixture film surface inside the dry electrode was attached to a slide glass (75 mm x 25 mm) using double-sided tape. That is, the slide glass was attached to an area corresponding to half the length of the electrode. Then, a roller was applied 10 times to ensure uniform adhesion of the double-sided tape, thereby preparing a sample for evaluation.

Next, the slide glass portion of the sample for evaluation was fixed to a sample stage of a universal testing machine (UTM), and the half of the electrode to which the slide glass was not attached was connected to a load cell of the UTM equipment. The load cell was moved up to 80 mm at a speed of 100 mm/min, and the load applied to the load cell was measured. In this case, a minimum value of the load measured in a 20 mm to 40 mm section of the driving path was measured as an adhesive strength (gf/20 mm) of each sample. Each electrode was measured 5 times in total, and an average value is shown in Table 3 below.

In this case, the current collector and the electrode mixture film were laminated through a roll press, but when the current collector and the electrode mixture film failed to adhere and were delaminated instantly, the adhesive strength was marked as "- ", indicating measurement was not available.

### Experimental Example 3: Interfacial resistance measurement

The dry electrodes prepared in Examples 1 to 5 and Comparative Examples 1 to 8 were cut into a size of 50 mm x 100 mm, and a current of 100 uA was applied to the electrodes using a method of MP resistance measurement, and a resistance value between an electrode mixture film and a current collector layer was measured using potential difference measured between 46 probes.

The measurement results are shown in Table 3 below.

**In this case, the current collector and the electrode mixture film were laminated through a roll press,** but when the current collector and the electrode mixture film failed to adhere and were delaminated instantly, the interfacial resistance was marked as "- ", indicating measurement was not available.

**[Table 3]**

| | Adhesion (gf/20 mm) | Interfacial resistance (Ωcm²) |
|---|---|---|
| Example 1 | 42.26 | 0.4724 |
| Example 2 | 43.56 | 0.7366 |
| Example 3 | 40.41 | 0.4697 |
| Example 4 | 42.41 | 0.5798 |
| Example 5 | 41.96 | 0.5394 |
| Comparative Example 1 | - | - |
| Comparative Example 2 | - | - |
| Comparative Example 3 | 36.40 | 0.6951 |
| Comparative Example 4 | 32.71 | 0.5669 |
| Comparative Example 5 | - | - |
| Comparative Example 6 | 47.17 | 1.0019 |
| Comparative Example 7 | 48.92 | 0.9981 |
| Comparative Example 8 | 43.36 | 1.0923 |

Referring to Table 3 above, Examples 1 to 5 were found to have excellent adhesion between the current collector and the electrode mixture film along with low interfacial resistance, compared to Comparative Examples.

In particular, in Comparative Examples 1 to 5 where the modulus is excessively high, it is seen that there was either no bonding or poor adhesion between the current collector and the electrode mixture film, and in Comparative Examples 6 to 8 where the modulus is excessively small, it is seen that the interfacial resistance was excessively high.

## Claims

1. A dry electrode comprising:
a current collector; and
an electrode mixture film comprising an electrode active material and a fiberizable binder disposed on the current collector,
wherein the current collector has a modulus of 13 GPa to 30 GPa.

2. The dry electrode of claim 1, wherein the current collector contains 0.75 wt% or less of iron (Fe) with respect to a total weight of the current collector.

3. The dry electrode of claim 1, wherein the current collector has a modulus of 14.4 GPa to 24.6 GPa.

4. The dry electrode of claim 1, wherein adhesion between the current collector and the electrode mixture film is 37 gf/20 mm to 200 gf/20 mm.

5. The dry electrode of claim 1, wherein the current collector has a tensile strength of 50 MPa to 250 MPa.

6. The dry electrode of claim 1, wherein an interfacial resistance between the current collector and the electrode mixture film is 0.0100 Ωcm² to 0.9900 Ωcm².

7. The dry electrode of claim 1, wherein the electrode active material comprises a phosphorus oxide represented by Formula 1 below:
[Formula 1] Li₁₊ₓ[Fe_{1-a-b}MnₐM¹_{b}]PO₄
wherein in Formula 1 above, M¹ comprises at least one element selected from the group consisting of Al, Mg, Ni, Co, Ti, Ga, Cu, V, Mo, Nb, W, Zr, Ce, In, Zn, and Y, and x, a, and b satisfy -0.5≤x≤0.5, 0≤a≤0.8, and 0≤b≤0.1.

8. The dry electrode of claim 1, wherein the electrode active material has an average particle size (D₅₀) of 0.1 µm to 10 µm.

9. The dry electrode of claim 1, wherein the fiberizable binder comprises a polytetrafluoroethylene (PTFE).

10. A method for preparing a dry electrode, the method comprising:
(S1)a step of preparing an electrode mixture film comprising an electrode active material and a fiberizable binder, and a current collector;
(S2) a step of heat treating the current collector to prepare a current collector having a modulus of 13 GPa to 30 GPa; and
(S3) a step of placing the electrode mixture film on at least one surface of the current collector and laminating the electrode mixture film.

11. The method of claim 10, wherein the heat treating is performed at a temperature of 240 °C to 320 °C.

12. The method of claim 10, wherein the heat treating is performed at a temperature of 280 °C to 300 °C.

13. The method of claim 10, wherein the heat treating is performed for 1.5 hours to 12 hours.

14. The method of claim 10, wherein the heat treating is performed for 3.0 hours to 8.0 hours.

15. A lithium secondary battery comprising the dry electrode of claim 1.
